# EUROPEAN PATENT SPECIFICATION

(11) **EP 4 083 880 B1**
(45) Date of publication and mention of the grant of the patent: **07.08.2024**
(21) Application number: 20917828.4
(22) Date of filing: 06.02.2020
(51) Int. Cl.: G06Q 10/063, G06Q 50/04, G05B 19/418

(54) **DATA PROCESSING APPARATUS, DATA PROCESSING METHOD, AND DATA PROCESSING PROGRAM**
DATENVERARBEITUNGSVORRICHTUNG, DATENVERARBEITUNGSVERFAHREN UND DATENVERARBEITUNGSPROGRAMM
APPAREIL DE TRAITEMENT DE DONNÉES, PROCÉDÉ DE TRAITEMENT DE DONNÉES ET PROGRAMME DE TRAITEMENT DE DONNÉES

(43) Date of publication of application: 02.11.2022
(73) Proprietor: MITSUBISHI ELECTRIC CORPORATION, Chiyoda-ku Tokyo 100-8310 (JP)
(72) Inventor: KAWAMURA, Yoshitsugu, Tokyo 100-8310 (JP); UENO, Gaku, Tokyo 100-8310 (JP); KAWASHIMA, Yuki, Tokyo 100-8310 (JP)
(74) Representative: Pfenning, Meinig & Partner mbB
(86) International application number: PCT/JP2020/004513
(87) International publication number: WO 2021/156998

(56) References cited:
- JP-A- 2006 338 134
- JP-A- 2009 223 492
- JP-A- 2011 008 463
- JP-A- 2018 125 757
- JP-A- H0 836 592
- US-A1- 2007 168 060
- US-A1- 2014 277 596
- US-A1- 2016 079 756
- US-A1- 2016 132 538
- US-A1- 2019 244 309

## Description

### Technical Field

The present disclosure relates to a technique of managing devices.

### Background Art

Conventionally, as a management method of devices and the like in a factory, a method has been adopted of managing pieces of information such as physical arrangement of the devices and a relation of electrical-connection between the devices.

For example, Patent Literature 1 manages devices in a factory as data models, and displays a plurality of pieces of device-relation data indicating relations between the devices in a plurality of definition forms. Patent Literature 1 displays, for example, device-relation data indicating physical arrangement of the devices and device-relation data indicating an electrical-connection relation between the devices.

### Citation List

### Patent Literature

Patent Literature 1: JP2004-013197A

### Summary of Invention

### Technical Problem

A technique of Patent Literature 1 can display the relations between the devices in the plurality of pieces of device-relation data of the plurality of definition forms. Although the same device is included and coexisted in the plurality of pieces of device-relation data, the technique of Patent Literature 1 has a problem that a user can not recognize the same device as the same device.

One of the main objects of the present disclosure is to solve the above-described problem. More specifically, the present disclosure mainly aims to enable recognizing the same device included and coexisted in a plurality of pieces of device-relation data.
US 2014/0277596 A1 discloses an automated method for managing a work flow in a process plant including steps of performing a work item and generating associated displays for an operator or other personnel to perform the steps of the work item.
US 2016/079756 A1 discloses a production energy management system.
US 2007/168060 A1 discloses a markup language-based, dynamic process graphics in a process plant user interface.

### Solution to Problem

In order to solve the above mentioned problem, the present application provides a data processing apparatus according to claim 1, a data processing method according to claim 4 and a data processing program according to claim 5.

### Advantageous Effects of Invention

According to the present disclosure, it is possible to recognize the same device included and coexisted in a plurality of pieces of device-relation data.

### Brief Description of Drawings

Fig. 1 is a diagram illustrating a functional configuration example of a data processing apparatus according to a first embodiment.
Fig. 2 is a diagram illustrating a hardware configuration example of the data processing apparatus according to the first embodiment.
Fig. 3 is a diagram illustrating examples of pieces of device-relation data according to the first embodiment.
Fig. 4 is a diagram illustrating an example of state-value displaying data according to the first embodiment.
Fig. 5 is a diagram illustrating an example of a device-information input screen according to the first embodiment.
Fig. 6 is a diagram illustrating an example of a data model according to the first embodiment.
Fig. 7 is a diagram illustrating an example of conversion data in an XML-format according to the first embodiment.
Fig. 8 is a flowchart illustrating an operation example of the data processing apparatus according to the first embodiment.
Fig. 9 is a flowchart illustrating an operation example of the data processing apparatus according to the first embodiment.
Fig. 10 is a diagram illustrating an example of conversion data in a CSV-format according to a second embodiment.

### Description of Embodiments

Hereinafter, embodiments will be described with reference to the drawings. In the following description of the embodiments and the drawings, parts assigned by the same reference numerals indicate the same parts or corresponding parts.

### First Embodiment.

### *** Description of Configuration ***

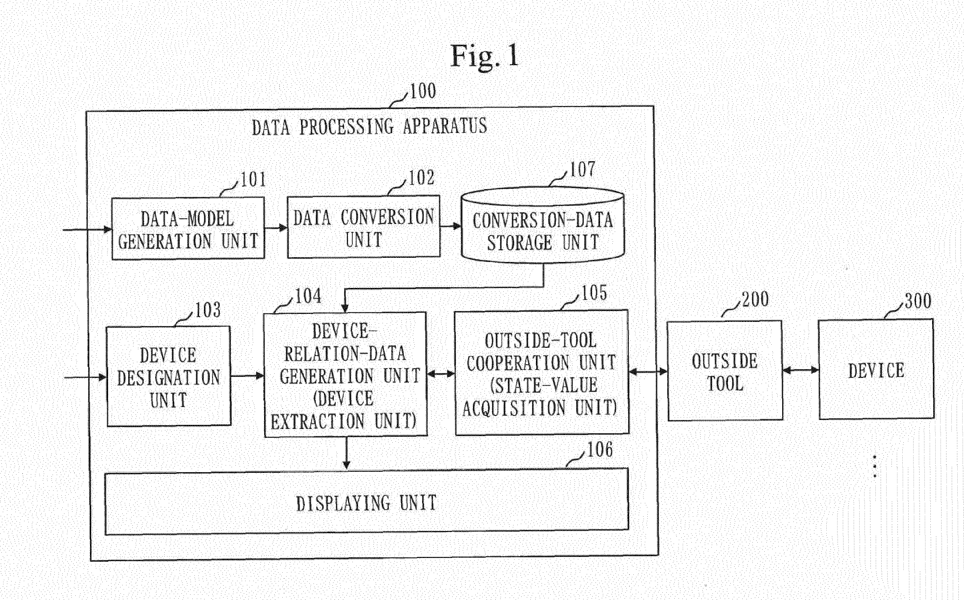

Fig. 1 illustrates a functional configuration example of a data processing apparatus 100 according to the present embodiment.

The data processing apparatus 100 is a computer. Further, an operation procedure of the data processing apparatus 100 is equivalent to a data processing method. Further, a program which realizes operation of the data processing apparatus 100 is equivalent to a data processing program.

The data processing apparatus 100 generates pieces of device-relation data indicating relations between a plurality of devices 300, and displays the generated pieces of device-relation data. The device 300 is, for example, device placed in a factory.

Further, the data processing apparatus 100 can access each of the plurality of devices 300 via an outside tool 200.

A data-model generation unit 101 generates data models. Details of the data model will be described later.

A data conversion unit 102 converts the data models generated by the data-model generation unit 101 into data in a different format. In the present embodiment, the data conversion unit 102 converts the data models into data in an XML-format. Note that, the data converted by the data conversion unit 102 is referred to as conversion data.

A conversion-data storage unit 107 stores the conversion data.

A device designation unit 103 designates as a subject device, a device 300 among the plurality of devices 300 according to an instruction from a user of the data processing apparatus 100.

A process performed by the device designation unit 103 is equivalent to a device designation process.

A device-relation-data generation unit 104 acquires the conversion data from the conversion-data storage unit 107, and generates the plurality of pieces of device-relation data, using the conversion data. In each of the plurality of pieces of device-relation data, the plurality of devices 300 are written, and relations between the plurality of devices 300 are defined in definition forms which are different from each other. In the present embodiment, as an example, the device-relation-data generation unit 104 is assumed to generate the device-relation data indicating physical arrangement of the devices, the device-relation data indicating an electrical-connection relation between the devices, and the device-relation data indicating a network-connection relation between the devices. Hereinafter, the device-relation data indicating the physical arrangement of the devices is referred to as physical-arrangement data. Further, the device-relation data indicating the electrical-connection relation between the devices is referred to as electrical-connection relation data. Further, the device-relation data indicating the network-connection relation between the devices is referred to as network-connection relation data.

Then, the device-relation-data generation unit 104 outputs to a displaying unit 106, the physical-arrangement data, the electrical-connection relation data, and the network-connection relation data which have been generated.

Further, when the subject device is designated by the device designation unit 103, the device-relation-data generation unit 104 extracts writing of the subject device in each piece of device-relation data. That is, the device-relation-data generation unit 104 specifies a position of the writing of the subject device in each of the physical-arrangement data, the electrical-connection relation data, and a network-connection relation data. Then, the device-relation-data generation unit 104 notifies the displaying unit 106 of the position of the writing of the subject device in each of the physical-arrangement data, the electrical-connection relation data, and the network-connection relation data which have been specified.

Further, the device-relation-data generation unit 104 generates state-value displaying data indicating state values of the device 300 acquired by an outside-tool cooperation unit 105 which will be described later, and outputs the generated state-value displaying data to the displaying unit 106.

The device-relation-data generation unit 104 is equivalent to a device extraction unit. Further, a process performed by the device-relation-data generation unit 104 is equivalent to a device extraction process.

The outside-tool cooperation unit 105 acquires the state values indicating states of each device 300 via the outside tool 200.

The state values are, for example, an electric current value, a voltage value, an electric power value, and the like of the device 300.

The outside-tool cooperation unit 105 outputs the state values acquired via the outside tool 200 to the device-relation-data generation unit 104.

Also, the outside-tool cooperation unit 105 can output the pieces of device-relation data to the outside tool 200.

The outside-tool cooperation unit 105 is equivalent to a state-value acquisition unit.

The displaying unit 106 displays on a display device, the plurality of pieces of device-relation data output by the device-relation-data generation unit 104.

Further, the displaying unit 106 associates the pieces of writing of the subject device with each other over the plurality of pieces of device-relation data, when the positions of the pieces of writing of the subject device are notified of by the device-relation-data generation unit 104.

Further, when the state-value displaying data is output by the device-relation-data generation unit 104, the displaying unit 106 displays the state-value displaying data on the display device.

A process performed by the displaying unit 106 is equivalent to a displaying process.

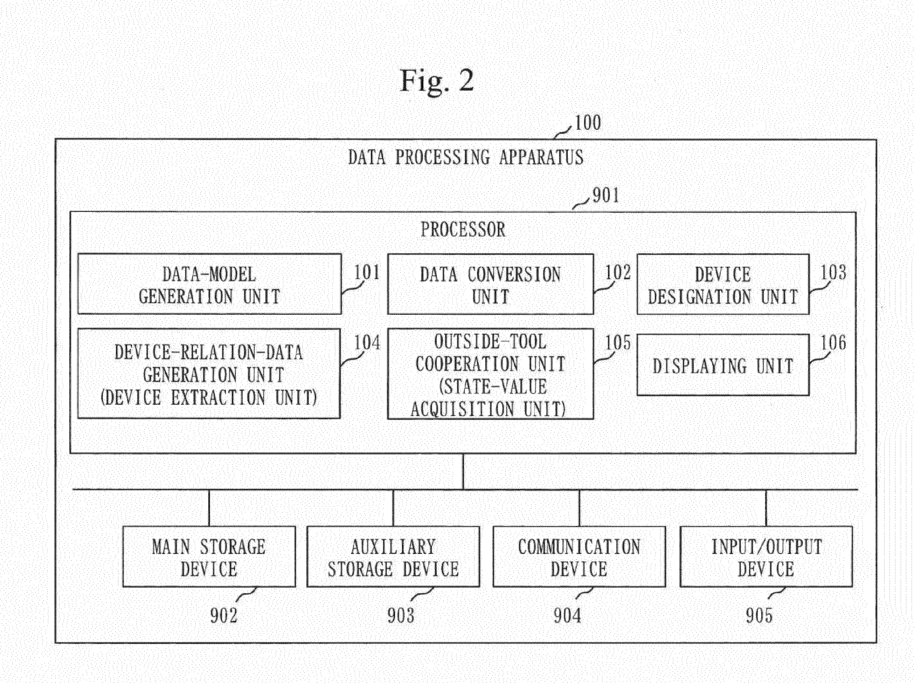

Fig. 2 illustrates a hardware configuration example of the data processing apparatus 100 according to the present embodiment.

The data processing apparatus 100 includes as pieces of hardware, a processor 901, a main storage device 902, an auxiliary storage device 903, a communication device 904, and an input/output device 905.

The auxiliary storage device 903 stores programs which realize functions of the data-model generation unit 101, the data conversion unit 102, the device designation unit 103, the device-relation-data generation unit 104, the outside-tool cooperation unit 105, and the displaying unit 106.

These programs are loaded from the auxiliary storage device 903 into the main storage device 902. Then, the processor 901 executes these programs, and performs operation of the data-model generation unit 101, the data conversion unit 102, the device designation unit 103, the device-relation-data generation unit 104, the outside-tool cooperation unit 105, and the displaying unit 106.

Fig. 2 schematically illustrates a state where the processor 901 executes the programs which realize the functions of the data-model generation unit 101, the data conversion unit 102, the device designation unit 103, the device-relation-data generation unit 104, the outside-tool cooperation unit 105, and the displaying unit 106.

The communication device 904 is used for performing communication with the outside tool 200.

The input/output devices 905 are a keyboard, a mouse, a display device, and the like.

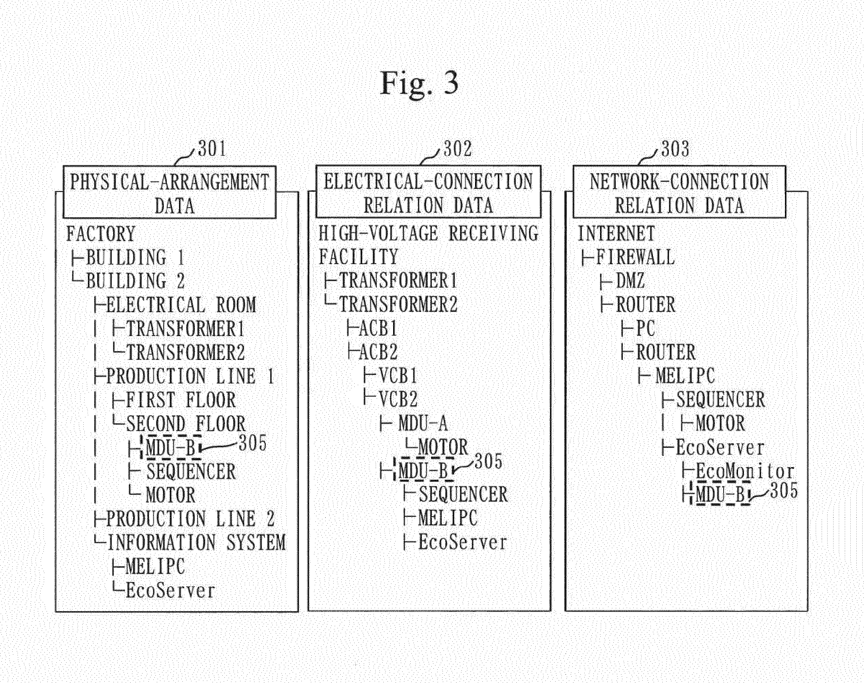

Fig. 3 illustrates examples of the pieces of device-relation data.

As described above, in the present embodiment, physical-arrangement data 301, electrical-connection relation data 302, and network-connection relation data 303 are generated as the pieces of device-relation data.

The physical-arrangement data 301 indicates the physical arrangement in the factory. The physical-arrangement data 301 indicates the physical arrangement in the factory in a hierarchical structure.

Among elements indicated in the physical-arrangement data 301, transformer1, transformer2, MDU-B, sequencer, motor, MELIPC, and EcoServer are the devices.

The electrical-connection relation data 302 indicates the electrical-connection relation in the factory. The electrical -connection relation data 302 indicates the electrical-connection relation in the factory in a hierarchical structure.

Among elements indicated in the electrical-connection relation data 302, transformer1, transformer2, ACB1, ACB2, VCB1, VCB2, MDU-A, MDU-B, sequencer, motor, MELIPC, and EcoServer are the devices.

The network-connection relation data 303 indicates the network-connection relation in the factory. The network-connection relation data 303 indicates the network-connection relation in the factory in a hierarchical structure.

Among elements indicated in the network-connection relation data 303, firewall, DMZ, router, PC, MELIPC, sequencer, motor, EcoServer, EcoMonitor, and MDU-B are the devices.

In the examples of Fig. 3, as indicated by reference numerals 305, MDU-B is emphatically displayed in each of the physical-arrangement data 301, the electrical-connection relation data 302, and the network-connection relation data 303. That is, the examples of Fig. 3 indicate an example where MDU-B has been designated by the device designation unit 103 as the subject device and the device-relation-data generation unit 104 has extracted the position of the writing of MDU-B in each of the physical-arrangement data 301, the electrical-connection relation data 302, and the network-connection relation data 303.

As described above, the data processing apparatus 100 according to the present embodiment can display the same device (MDU-B) as the same device in the plurality of pieces of device-relation data.

Note that, although in the examples of Fig. 3, emphatic displaying is made by surrounding the subject device in a dotted line, the emphatic displaying may be made by any method. For example, it is conceivable to display character strings of the subject device in different color from color of character strings of the other devices, to display backgrounds of areas of the subject device in different color from color of backgrounds of areas of the other devices, and so on.

In each of the physical-arrangement data 301, the electrical-connection relation data 302, and the network-connection relation data 303 in Fig. 3, an example is illustrated in which there is one root node at a highest level in a tree. However, a plurality of root nodes may exist.

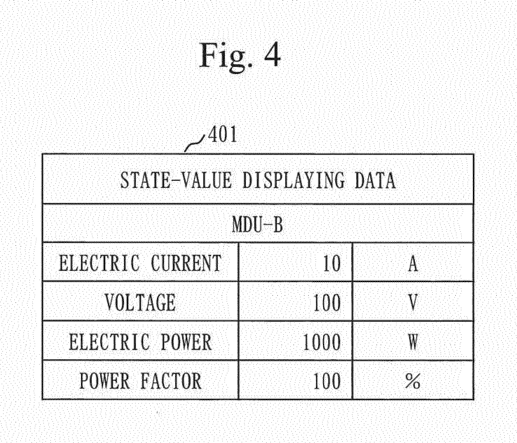

Fig. 4 illustrates an example of the state-value displaying data 401 according to the present embodiment.

The example of Fig. 4 indicates an electric current value, a voltage value, an electric power value, and a power factor value as the state values of MDU-B.

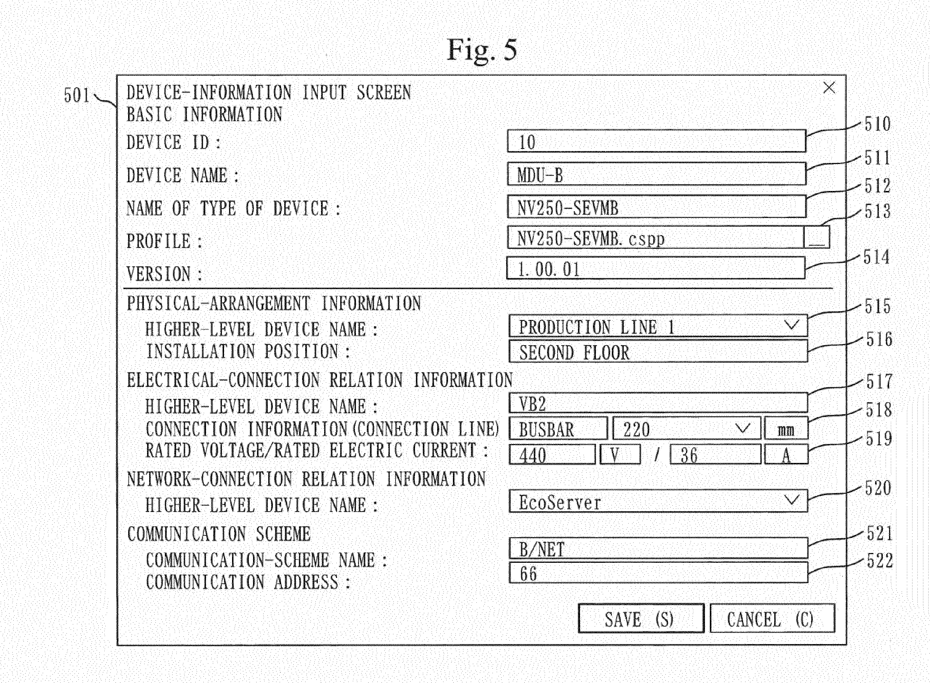

Fig. 5 illustrates an example of a device-information input screen 501 according to the present embodiment.

Fig. 5 illustrates the device-information input screen 501 for inputting device information of MDU-B in Fig. 3.

The displaying unit 106 displays the device-information input screen 501 illustrated in Fig. 5 on the display device.

The user inputs the device information into the device-information input screen 501, using a mouse and a keyboard.

The user inputs basic information, physical-arrangement information, electrical-connection information, and network-connection information into the device-information input screen 501.

The user inputs a device ID, a device name, a name of a type of device, a profile, and a version as the basic information. Specifically, the user inputs the device ID into a field 510. Further, the user inputs the device name into a field 511.

Further, the user inputs the name of the type of device into a field 512. Further, the user inputs the profile into a field 513. Further, the user inputs the version into a field 514.

The user inputs a higher-level device name and an installation position as the physical-arrangement information. Specifically, the user inputs the higher-level device name into a field 515. Further, the user inputs the installation position into a field 516.

The user inputs a higher-level device name, connection information (a connection line), and rated voltage/rated electric current as the electrical-connection relation information. Specifically, the user inputs the higher-level device name into a field 517. Further, the user inputs the connection information (the connection line) into fields 518. Further, the user inputs the rated voltage/rated electric current into fields 519.

The user inputs a higher-level device name, a communication-scheme name, and a communication address as the network-connection relation information. Specifically, the user inputs the higher-level device name into a field 520. Further, the user inputs the communication-scheme name into a field 521. Further, the user inputs the communication address into a field 522.

Although Fig. 5 illustrates the device-information input screen 501 for inputting the device information of MDU-B, the user inputs necessary values into the device-information input screen 501 for each of the elements in Fig. 3. Since higher-level devices do not exist for the highest-level elements in Fig. 3, that is "factory" in the physical-arrangement data 301, "high-voltage receiving facility" in the electrical-connection relation data 302, and "Internet" in the network-connection relation data 303, the user does not input the higher-level devices for these elements.

The user presses a save button after completing the input into the device-information input screen 501. Values which have been input into the device-information input screen 501 are input into the data-model generation unit 101 by the pressing on the save button.

The data-model generation unit 101 generates the data model for each element, using the values which have been input into the device-information input screen 501 of Fig. 5.

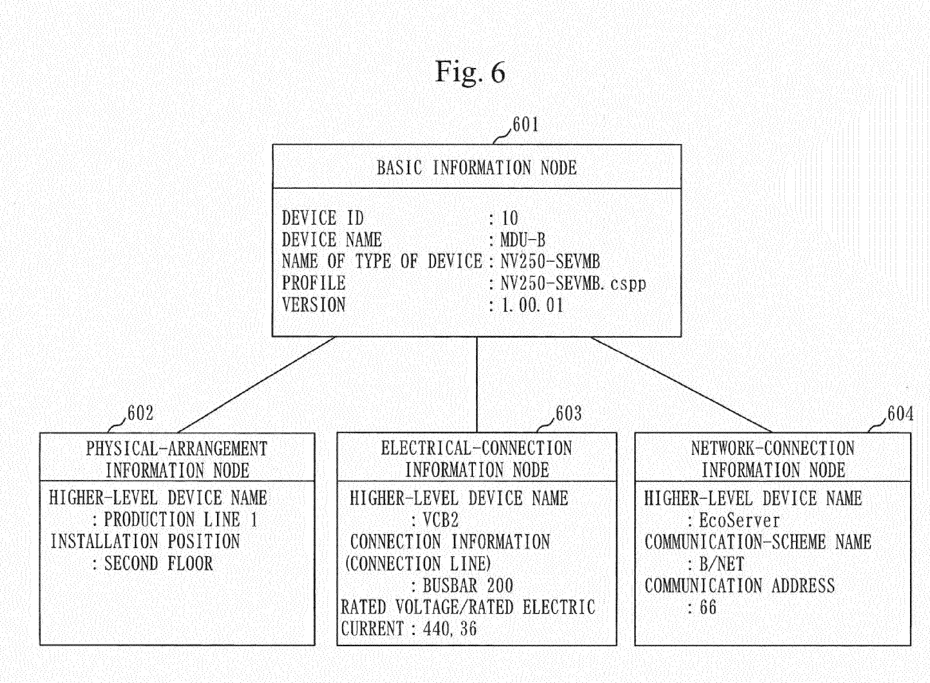

Fig. 6 illustrates an example of the data model generated by the data-model generation unit 101.

More specifically, Fig. 6 illustrates the example of the data model generated from the device-information input screen 501 of Fig. 5. That is, Fig. 6 illustrates the data model of MDU-B.

A basic-information node 601 is a node corresponding to the basic information on the device-information input screen 501. In the basic-information node 601, the values which have been input into the field 510, the field 511, the field 512, the field 513, and the field 514 in Fig. 5 are set.

A physical-arrangement information node 602 is a node corresponding to the physical-arrangement information on the device-information input screen 501. In the physical-arrangement information node 602, the values which have been input into the field 515 and the field 516 are set.

An electrical-connection information node 603 is a node corresponding to the electrical-connection information on the device-information input screen 501. In the electrical-connection information node 603, the values which have been input into the field 517, the fields 518, and the fields 519 are set.

A network-connection information node 604 is a node corresponding to the network-connection relation information on the device-information input screen 501. In the network-connection information node 604, the values which have been input into the field 520, the field 521, and the field 522 are set.

Although Fig. 6 illustrates the data model of MDU-B, the data-model generation unit 101 generates for each of the elements in Fig. 3, a data model similar to the data model in Fig. 6.

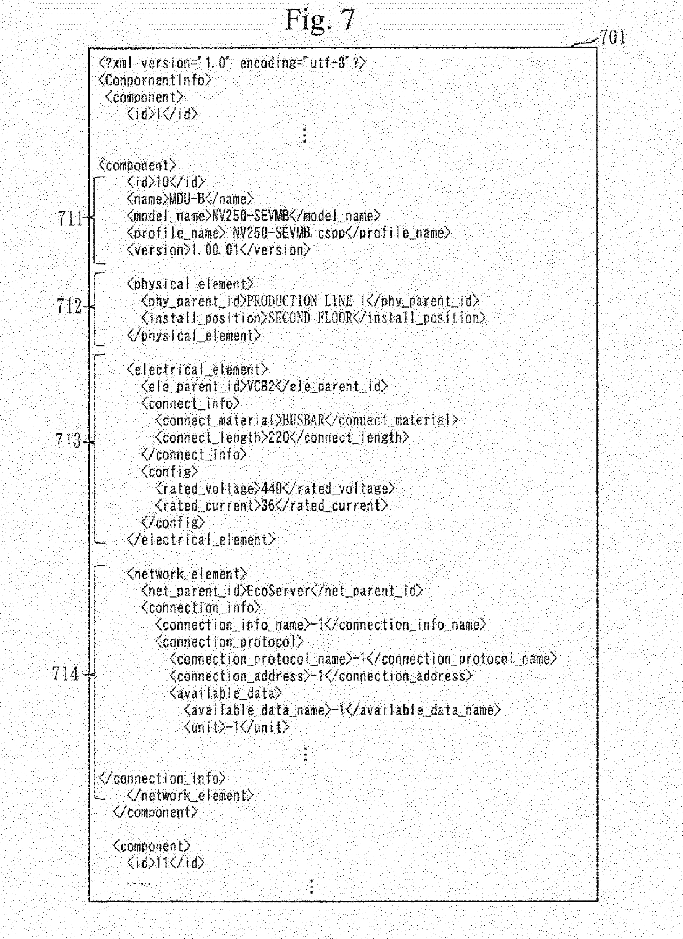

Fig. 7 illustrates an example of conversion data 701 generated by the data conversion unit 102. Fig. 7 illustrates the example of the conversion data 701 obtained by converting the data models into an XML format. The conversion data 701 describes each of the elements indicated in Fig. 3. Fig. 7 mainly indicates descriptions of MDU-B.

A basic-information block 711 describes items indicated in the basic-information node 601.

A physical-arrangement information block 712 describes items indicated in the physical-arrangement information node 602.

An electrical-connection information block 713 describes items indicated in the electrical-connection information node 603.

A network-connection information block 714 describes items indicated in the network-connection information node 604.

The same configurations are applied to the devices other than MDU-B.

The device-relation-data generation unit 104 analyzes the conversion data 701 illustrated in Fig. 7, and generates the physical-arrangement data 301 from the physical-arrangement information block 712. Further, the device-relation-data generation unit 104 generates the electrical-connection relation data 302 from the electrical-connection information block 713. Further, the device-relation-data generation unit 104 generates the network-connection relation data 303 from the network-connection information block 714.

More specifically, the device-relation-data generation unit 104 repeats operation of extracting elements ("production line 1" and "second floor" in the example of Fig. 7) at immediately-upper layers from the physical-arrangement information block 712 in ascending order from an element at the lowest layer, and generates the physical-arrangement data 301. Also for the electrical-connection relation data 302, the device-relation-data generation unit 104 repeats operation of extracting elements at immediately-upper layers from the electrical-connection information block 713 in ascending order from an element at the lowest layer, and generates the electrical-connection relation data 302. Further, also for the network-connection relation data 303, the device-relation-data generation unit 104 repeats operation of extracting elements at immediately-upper layers from the network-connection information block 714 in ascending order from an element at the lowest layer, and generates the network-connection relation data 303.

### *** Description of Operation ***

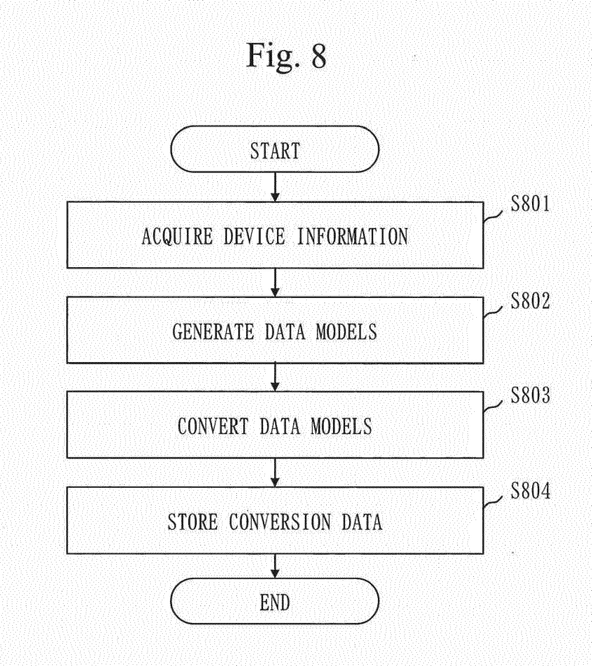

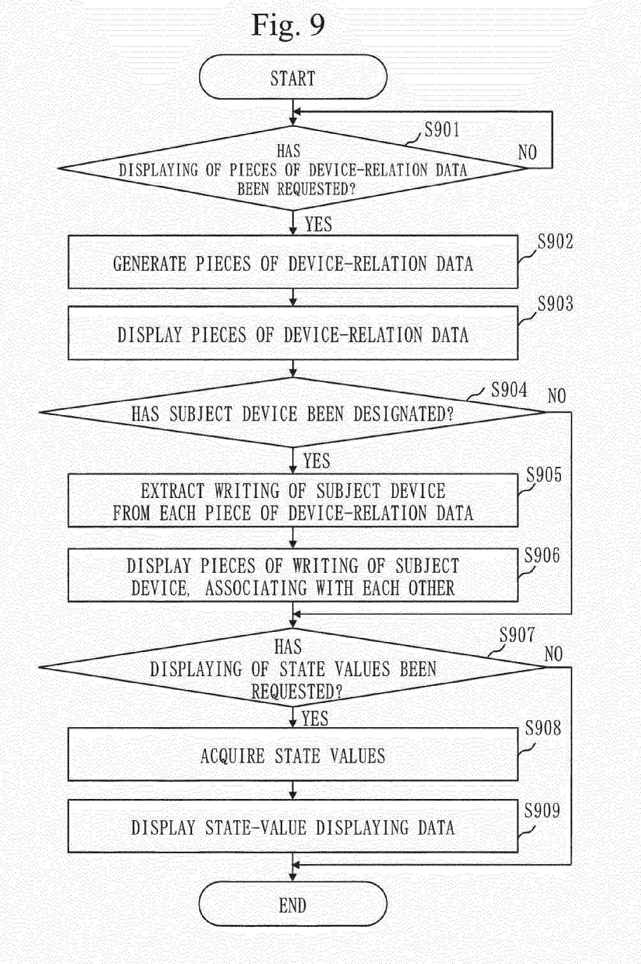

With reference to Figs. 8 and 9, operation of the data processing apparatus 100 according to the present embodiment will be described.

Fig. 8 illustrates operation procedures up to storage of the conversion data.

Fig. 9 illustrates operation procedures of generating and displaying the pieces of device-relation data, emphatically displaying the subject device, and generating and displaying the state-value displaying data.

In step S801 in Fig. 8, the data-model generation unit 101 acquires the device information.

More specifically, the displaying unit 106 displays the device-information input screen 501 of Fig. 5 on the display device. Then, the data-model generation unit 101 acquires as the device information, the input value into each field on the device-information input screen 501 from the keyboard, the mouse, and the like.

Next, in step S802, the data-model generation unit 101 generates the data model (the basic-information node 601, the physical-arrangement information node 602, the electrical-connection information node 603 and the network-connection information node 604) of Fig. 6 for each device based on the input values of the device-information input screen 501.

The data-model generation unit 101 outputs the data model generated for each device to the data conversion unit 102.

Next, in step S803, the data conversion unit 102 converts the data models into the conversion data, and generates the conversion data exemplified in Fig. 7.

More specifically, the data conversion unit 102 integrates the data models of the devices, and further converts the integrated data model into the conversion data 701 exemplified in Fig. 7.

Then, in step S804, the data conversion unit 102 stores the conversion data in the conversion-data storage unit 107.

In Fig. 9, if the user requests displaying of the pieces of device-relation data (YES in step S901), in step S902, the device-relation-data generation unit 104 acquires the conversion data from the conversion-data storage unit 107, and analyzes the conversion data to generate the pieces of device-relation data. That is, the device-relation-data generation unit 104 generates the physical-arrangement data 301, the electrical-connection relation data 302, and the network-connection relation data 303 in Fig. 3.

As described above, the device-relation-data generation unit 104 generates the physical-arrangement data 301 from the physical-arrangement information block 712. Further, the device-relation-data generation unit 104 generates the electrical-connection relation data 302 from the electrical-connection information block 713. Further, the device-relation-data generation unit 104 generates the network-connection relation data 303 from the network-connection information block 714.

Then, in step S903, the displaying unit 106 displays the physical-arrangement data 301, the electrical-connection relation data 302, and the network-connection relation data 303 on the display device. In this step, the emphatic displaying 305 for MDU-B has not been performed.

Next, when the device designation unit 103 designates the subject device, triggered by an instruction from the user (YES in step S904), in step S905, the device-relation-data generation unit 104 extracts the writing of the subject device from each piece of device-relation data.

For example, it is assumed that the user has clicked by the mouse on MDU-B indicated in the physical-arrangement data 301. Thereby, the device designation unit 103 designates MDU-B as the subject device. The device designation unit 103 notifies the device-relation-data generation unit 104 of MDU-B as the subject device.

The device-relation-data generation unit 104 scans each of the electrical-connection relation data 302 and the network-connection relation data 303 for the same character string as MDU-B, performing, for example, character recognition, and extracts the positions of the pieces of writing of MDU-B in the electrical-connection relation data 302 and the network-connection relation data 303.

Then, the device-relation-data generation unit 104 notifies the displaying unit 106 of the extracted positions of the pieces of writing of MDU-B in the electrical-connection relation data 302 and the network-connection relation data 303, and a position (the position of the writing of MDU-B in the physical-arrangement data 301) clicked on by the user through the mouse.

Next, in step S906, the displaying unit 106 displays the pieces of writing of the subject device in the plurality of pieces of relation data, associating the pieces of writing with each other. That is, the displaying unit 106 displays emphatically in each of the physical-arrangement data 301, the electrical-connection relation data 302 and the network-connection relation data 303, the position of the writing notified of by the device-relation-data generation unit 104.

Next, if the user requests displaying of the state values of any device (YES in step S907), in step S908, the outside-tool cooperation unit 105 accesses the corresponding device 300 via the outside tool 200, and acquires the state values from the device 300.

The outside-tool cooperation unit 105 notifies the device-relation-data generation unit 104 of the acquired state values.

In step S909, the device-relation-data generation unit 104 generates the state-value displaying data 401 indicating the state values which have been notified of by the outside-tool cooperation unit 105, and the displaying unit 106 displays the state-value displaying data 401 on the display device.

### * * * Description of Effect of Embodiment * * *

As described above, according to the present embodiment, the same device included and coexisted in the plurality of pieces of device-relation data can be displayed as the same device.

Thereby, the user can recognize the same device included and coexisted in the plurality of pieces of device-relation data as the same device. Further, since the user can recognize the same device, the user can correctly understand the physical arrangement, the electrical-connection relation, and the network-connection relation in the factory.

Further, according to the present embodiment, since current state values of the device are displayed, the user can comprehend a current state of the device.

The physical-arrangement data 301, the electrical-connection relation data 302, and the network-connection relation data 303 have been indicated above as the examples of the pieces of device-relation data. However, the pieces of device-relation data are not limited to these.

Further, mainly an example has been described above in which the pieces of device-relation data are presented to the user of the data processing apparatus 100. However, it is possible to present the pieces of device-relation data to the outside of the data processing apparatus 100. Specifically, if there is a request from the outside tool 200, the outside-tool cooperation unit 105 can acquire the pieces of device-relation data from the device-relation-data generation unit 104, and output the acquired pieces of device-relation data to the outside tool 200. Thereby, it is possible to refer to the pieces of device-relation data outside the data processing apparatus 100.

### Second Embodiment.

In the present embodiment, mainly matters different from the first embodiment will be described.

Note that, matters not described below are the same as those in the first embodiment.

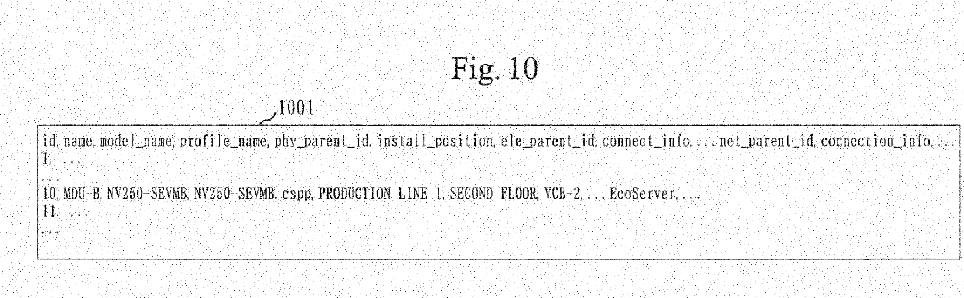

Fig. 10 illustrates an example of the conversion data according to the present embodiment.

In the present embodiment, the data conversion unit 102 converts the integrated data model into conversion data 1001 in a CSV format.

Contents described in the conversion data 1001 in the CSV format in Fig. 10 are the same as contents described in the conversion data 701 in the XML format in Fig. 7.

Operation of the data processing apparatus 100 is the same as that indicated in the first embodiment except that the conversion data 1001 in the CSV format in Fig. 10 is used in place of the conversion data 701 in the XML format in Fig. 7.

Although the first and second embodiments have been described above, these two embodiments may be combined and implemented.

Alternatively, one of these two embodiments may be partially implemented.

Alternatively, these two embodiments may be partially combined and implemented.

Further, the configurations and the procedures described in these two embodiments may be modified as necessary.

### *** Supplementary Description of Hardware Configuration ***

Finally, supplementary descriptions of the hardware configuration of the data processing apparatus 100 will be given.

The processor 901 illustrated in Fig. 2 is an IC (Integrated Circuit) that performs processing.

The processor 901 is a CPU (Central Processing Unit), a DSP (Digital Signal Processor), or the like.

The main storage device 902 illustrated in Fig. 2 is a RAM (Random Access Memory).

The auxiliary storage device 903 illustrated in Fig. 2 is a ROM (Read Only Memory), a flash memory, an HDD (Dard Disk Drive), or the like.

The communication device 904 illustrated in Fig. 2 is an electronic circuit that executes a communication process of data.

The communication device 904 is, for example, a communication chip or an NIC (Network Interface Card).

Further, the auxiliary storage device 903 also stores an OS (Operating System). Then, at least a part of the OS is executed by the processor 901.

While executing at least the part of the OS, the processor 901 executes the programs which realize the functions of the data-model generation unit 101, the data conversion unit 102, the device designation unit 103, the device-relation-data generation unit 104, and the outside-tool cooperation unit 105.

By the processor 901 executing the OS, task management, memory management, file management, communication control, and the like are performed.

Further, at least one of information, data, a signal value, and a variable value that indicate results of processes of the data-model generation unit 101, the data conversion unit 102, the device designation unit 103, the device-relation-data generation unit 104, and the outside-tool cooperation unit 105 is stored in at least one of the main storage device 902, the auxiliary storage device 903, and a register and a cash memory in the processor 901.

Further, the programs which realize the functions of the data-model generation unit 101, the data conversion unit 102, the device designation unit 103, the device-relation-data generation unit 104, and the outside-tool cooperation unit 105 may be stored in a portable recording medium such as a magnetic disk, a flexible disk, an optical disc, a compact disc, a Blu-ray (registered trademark) disc, or a DVD. Then, the portable recording medium storing the programs which realize the functions of the data-model generation unit 101, the data conversion unit 102, the device designation unit 103, the device-relation-data generation unit 104, and the outside-tool cooperation unit 105 may be distributed.

Further, "unit" of the data-model generation unit 101, the data conversion unit 102, the device designation unit 103, the device-relation-data generation unit 104, and the outside-tool cooperation unit 105 may be read as "circuit", "step", "procedure", or "process".

Further, the data processing apparatus 100 may be realized by a processing circuit. The processing circuit is, for example, a logic IC (Integrated Circuit), a GA (Gate Array), an ASIC (Application Specific Integrated Circuit), or an FPGA (Field-Programmable Gate Array).

In this case, each of the data-model generation unit 101, the data conversion unit 102, the device designation unit 103, the device-relation-data generation unit 104, and the outside-tool cooperation unit 105 is realized as a part of the processing circuit.

Note that, in the present specification, a superordinate concept of the processor and the processing circuit is referred to as "processing circuitry".

That is, each of the processor and the processing circuit is a specific example of the "processing circuitry".

### Reference Signs List

100: data processing apparatus, 101: data-model generation unit, 102: data conversion unit, 103: device designation unit, 104: device-relation-data generation unit, 105: outside-tool cooperation unit, 106: displaying unit, 107: conversion-data storage unit, 200: outside tool, 300: device, 301: physical-arrangement data, 302: electrical-connection relation data, 303: network-connection relation data, 401: state-value displaying data, 501: device-information input screen, 601: basic-information node, 602: physical-arrangement information node, 603: electrical-connection information node, 604: network-connection information node, 701: conversion data, 711: basic-information block, 712: physical-arrangement information block, 713: electrical-connection information block, 714: network-connection information block, 901: processor, 902: main storage device, 903: auxiliary storage device, 904: communication device, 905: input/output device, 1001: conversion data.

## Claims

1. A data processing apparatus (100) comprising:
a displaying unit (106) to display a plurality of pieces of device-relation data in each of which a plurality of devices are written and a relation between the plurality of devices is defined in a different definition form from each other;
a device designation unit (103) to designate as a subject device, a device among the plurality of devices; and
a device extraction unit (104) to extract writing of the subject device for each piece of the plurality of pieces of device-relation data, and
wherein the displaying unit associates the pieces of writing of the subject device with each other over the plurality of pieces of device-relation data,
wherein the displaying unit displays three pieces of device-relation data in which the relation between the plurality of devices is defined by physical arrangement, an electrical-connection relation, and a network-connection relation.

2. The data processing apparatus according to claim 1, wherein the displaying unit emphasizes the pieces of writing of the subject device more than pieces of writing of the other devices in the plurality of pieces of device-relation data.

3. The data processing apparatus according to claim 1 further comprising
a state-value acquisition unit (105) to acquire a state value indicating a state of the subject device, and
wherein the displaying unit displays the acquired state value of the subject device.

4. A data processing method by a computer which displays a plurality of pieces of device-relation data in each of which a plurality of devices are written and a relation between the plurality of devices is defined in a different definition form from each other, wherein the plurality of pieces of device-relation data comprise three pieces of device-relation data in which the relation between the plurality of devices is defined by physical arrangement, an electrical-connection relation, and a network-connection relation, the data processing method comprising:
designating as a subject device, a device among the plurality of devices;
extracting writing of the subject device for each piece of the plurality of pieces of device-relation data; and
associating the pieces of writing of the subject device with each other over the plurality of pieces of device-relation data.

5. A data processing program which causes a computer which displays a plurality of pieces of device-relation data in each of which a plurality of devices are written and a relation between the plurality of devices is defined in a different definition form from each other, wherein the plurality of pieces of device-relation data comprise three pieces of device-relation data in which the relation between the plurality of devices is defined by physical arrangement, an electrical-connection relation, and a network-connection relation, to execute:
a device designation process of designating as a subject device, a device among the plurality of devices;
a device extraction process of extracting writing of the subject device for each piece of the plurality of pieces of device-relation data; and
a displaying process of associating the pieces of writing of the subject device with each other over the plurality of pieces of device-relation data.

## Patentansprüche

1. Datenverarbeitungsvorrichtung (100), umfassend:
eine Anzeigeeinheit (106) zum Anzeigen einer Vielzahl von Teilen von Einrichtungsbeziehungsdaten, in die jeweils eine Vielzahl von Einrichtungen geschrieben sind und eine Beziehung zwischen der Vielzahl von Einrichtungen definiert ist, in einer voneinander verschiedenen Definitionsform;
eine Einrichtungsbestimmungseinheit (103) zum Bestimmen einer Einrichtung aus der Vielzahl von Einrichtungen als eine Zieleinrichtung; und
eine Einrichtungsextraktionseinheit (104) zum Extrahieren von Schriftzügen der Zieleinrichtung für jedes Teil der Vielzahl von Teilen von Einrichtungsbeziehungsdaten, und
wobei die Anzeigeeinheit die Teile von Schriftzügen der Zieleinrichtung über die Vielzahl von Teilen von Einrichtungsbeziehungsdaten miteinander verknüpft,
wobei die Anzeigeeinheit drei Teile von Einrichtungsbeziehungsdaten anzeigt, in denen die Beziehung zwischen der Vielzahl von Einrichtungen durch eine physikalische Anordnung, eine elektrische Verbindungsbeziehung und eine Netzwerkverbindungsbeziehung definiert ist.

2. Datenverarbeitungsvorrichtung nach Anspruch 1, wobei
die Anzeigeeinheit die Teile von Schriftzügen der Zieleinrichtung mehr hervorhebt als Teile von Schriftzügen der anderen Einrichtungen in der Vielzahl von Teilen von Einrichtungsbeziehungsdaten.

3. Datenverarbeitungsvorrichtung nach Anspruch 1, ferner umfassend
eine Zustandswertbeschaffungseinheit (105), um einen Zustandswert zu beschaffen, der einen Zustand der Zieleinrichtung angibt, und
wobei die Anzeigeeinheit den beschafften Zustandswert der Zieleinrichtung anzeigt.

4. Datenverarbeitungsverfahren durch einen Computer, der eine Vielzahl von Teilen von Einrichtungsbeziehungsdaten anzeigt, in die jeweils eine Vielzahl von Einrichtungen geschrieben sind und eine Beziehung zwischen der Vielzahl von Einrichtungen definiert ist, in einer voneinander verschiedenen Definitionsform, wobei die Vielzahl von Teilen von Einrichtungsbeziehungsdaten drei Teile von Einrichtungsbeziehungsdaten umfasst, in denen die Beziehung zwischen der Vielzahl von Einrichtungen durch eine physikalische Anordnung, eine elektrische Verbindungsbeziehung und eine Netzwerkverbindungsbeziehung definiert ist, wobei das Datenverarbeitungsverfahren umfasst:
Bestimmen einer Einrichtung aus der Vielzahl von Einrichtungen als eine Zieleinrichtung;
Extrahieren von Schriftzügen der Zieleinrichtung für jedes Teil der Vielzahl von Teilen von Einrichtungsbeziehungsdaten; und
Miteinander verknüpfen der Teile von Schriftzügen der Zieleinrichtung über die Vielzahl von Teilen von Einrichtungsbeziehungsdaten.

5. Datenverarbeitungsprogramm, das
einen Computer, der eine Vielzahl von Teilen von Einrichtungsbeziehungsdaten, in die jeweils eine Vielzahl von Einrichtungen geschrieben sind und eine Beziehung zwischen der Vielzahl von Einrichtungen definiert ist, in einer voneinander verschiedenen Definitionsform anzeigt, wobei die Vielzahl von Teilen von Einrichtungsbeziehungsdaten drei Teile von Einrichtungsbeziehungsdaten umfasst, in denen die Beziehung zwischen der Vielzahl von Einrichtungen durch eine physikalische Anordnung, eine elektrische Verbindungsbeziehung und eine Netzwerkverbindungsbeziehung definiert ist, veranlasst, auszuführen:
einen Einrichtungsbestimmungsprozess des Bestimmens einer Zieleinrichtung aus der Vielzahl von Einrichtungen;
einen Einrichtungsextraktionsprozess des Extrahierens von Schriftzügen der Zieleinrichtung für jedes Teil der Vielzahl von Teilen von Einrichtungsbeziehungsdaten; und
einen Anzeigeprozess des Verknüpfens der Teile von Schriftzügen der Zieleinrichtung miteinander über die Vielzahl von Teilen von Einrichtungsbeziehungsdaten.

## Revendications

1. Appareil de traitement de données (100), comprenant :
une unité d'affichage (106) pour afficher une pluralité d'éléments de données relatives à un dispositif dans chacun desquels une pluralité de dispositifs sont décrits et une relation entre la pluralité de dispositifs est définie sous une forme de définition mutuellement différente ;
une unité de désignation de dispositif (103) pour désigner, en tant que dispositif sujet, un dispositif parmi la pluralité de dispositifs ; et
une unité d'extraction de dispositif (104) pour extraire une description du dispositif sujet pour chaque élément de la pluralité d'éléments de données relatives à un dispositif, et
dans lequel l'unité d'affichage associe les éléments d'écriture du dispositif sujet les uns aux autres sur la pluralité d'éléments de données relatives à un dispositif,
dans lequel l'unité d'affichage affiche trois éléments de données relatives à un dispositif dans lesquels la relation entre la pluralité de dispositifs est définie par un agencement physique, une relation de connexion électrique et une relation de connexion à un réseau.

2. L'appareil de traitement des données selon la revendication 1, dans lequel
l'unité d'affichage met l'accent sur les éléments d'écriture de l'appareil concerné plus que sur les éléments d'écriture des autres appareils dans la pluralité d'éléments de données relatives aux appareils.

3. Appareil de traitement de données selon la revendication 1, comprenant en outre
une unité d'acquisition de valeur d'état (105) pour acquérir une valeur d'état indiquant un état du dispositif sujet, et
dans lequel l'unité d'affichage affiche la valeur d'état acquise du dispositif sujet.

4. Procédé de traitement de données par un ordinateur qui affiche une pluralité d'éléments de données relatives à un dispositif dans chacun desquels une pluralité de dispositifs sont décrits et une relation entre la pluralité de dispositifs est définie sous une forme de définition mutuellement différente, dans lequel la pluralité d'éléments de données relatives à un dispositif comprend trois éléments de données relatives à un dispositif dans lesquels la relation entre la pluralité de dispositifs est définie par un agencement physique, une relation de connexion électrique et une relation de connexion à un réseau, le procédé de traitement de données comprenant les étapes consistant à :
désigner comme dispositif sujet, un dispositif parmi la pluralité de dispositifs ;
extraire une description du dispositif sujet pour chaque élément de la pluralité d'éléments de données relatives à un dispositif, et
associer les éléments de description du dispositif sujet les uns aux autres sur la pluralité d'éléments de données relatives à un dispositif.

5. Programme de traitement de données qui amène
un ordinateur qui affiche une pluralité d'éléments de données relatives à un dispositif dans chacun desquels une pluralité de dispositifs sont décrits et une relation entre la pluralité de dispositifs est définie sous une forme de définition mutuellement différente, dans lequel la pluralité d'éléments de données relatives à un dispositif comprend trois éléments de données relatives à un dispositif dans lesquels la relation entre la pluralité de dispositifs est définie par un agencement physique, une relation de connexion électrique et une relation de connexion à un réseau, à exécuter :
un processus de désignation de dispositif pour désigner en tant que dispositif sujet, un dispositif parmi la pluralité de dispositifs ;
un processus d'extraction de dispositif pour extraire une description du dispositif sujet pour chaque élément de la pluralité d'éléments de données relatives à un dispositif, et
un processus d'affichage pour associer les éléments de description du dispositif sujet les uns aux autres sur la pluralité d'éléments de données relatives à un dispositif.
